# FASCICULE DE BREVET EUROPEEN

(11) **EP 2 389 794 B1**
(45) Date de publication et mention de la délivrance du brevet: **11.05.2016**
(21) Numéro de dépôt: 11158121.1
(22) Date de dépôt: 14.03.2011
(51) Int. Cl.: A01C 7/08, A01C 7/06

(54) **Semoir avec une distribution pneumatique**
Sämaschine mit Pneumatischer Verteilung
Seeder with pneumatic distribution

(30) Priorité: 15.03.2010 FR 1051815
(43) Date de publication de la demande: 30.11.2011
(73) Titulaire: KUHN S.A., 67700 Saverne (FR)
(72) Inventeur: Audigie, Jean-Charles, 67330, BOUXWILLER (FR)

(56) Documents cités:
- BE-A- 524 741
- US-A- 5 974 986
- US-A1- 2004 250 742
- US-A1- 2007 113 764
- US-A1- 2008 295 751

## Description

La présente invention se rapporte au domaine technique général du machinisme agricole. L'invention concerne un semoir avec un châssis longitudinal portant une trémie contenant du produit et une poutre transversale sur laquelle sont répartis des éléments d'introduction de produit dans le sol, ladite poutre transversale présentant un tronçon central et deux tronçons latéraux, les tronçons latéraux s'étendant de part et d'autre dudit tronçon central au travail et s'étendant parallèlement audit châssis pour le transport, chaque élément d'introduction de produit dans le sol est alimenté en produit par ladite trémie au moyen d'un doseur, d'un injecteur et d'une conduite d'acheminement.

De tels semoirs sont connus, ils présentent un châssis longitudinal portant une trémie et une poutre transversale sur laquelle sont répartis des éléments d'introduction de produit dans le sol, ladite poutre transversale présentant un tronçon central et deux tronçons latéraux, les tronçons latéraux s'étendant de part et d'autre du tronçon central au travail et s'étendant parallèlement au châssis au transport. Des éléments d'introduction de produit dans le sol sont alimentés en produit au moyen d'une trémie de stockage s'étendant transversalement. Cette trémie comporte une rangée de doseurs s'étendant transversalement sur toute la largeur de la trémie. Chaque élément d'introduction de produit dans le sol est alimenté en produit par un doseur individuel. Le produit passe du doseur vers un injecteur correspondant pour alimenter l'élément d'introduction de produit dans le sol.

Avec une telle distribution individuelle, le produit est distribué de manière précise et régulière. Ces distributions individuelles présentent un encombrement important en largeur. Ainsi, le nombre d'éléments d'introduction de produit dans le sol est limité par la largeur de la trémie qui est conditionnée par la règlementation routière. D'autre part sur ce semoir, la trémie est située au-dessus du châssis de manière à ce que les tronçons latéraux puissent être repliés vers l'avant en passant sous la trémie. Le centre de gravité de la trémie est donc relativement éloigné du sol. La hauteur de chargement de la trémie est également importante.

Un autre semoir décrit dans le document US 2008/295751 divulgue également un doseur individuel par rang. Les doseurs sont disposés côte à côte dans la partie médiane et inférieure de la trémie, ils sont regroupés selon une seule rangée longitudinale. Les injecteurs sont intégrés à chaque doseur et sont de ce fait arrangés selon une seule rangée longitudinale. Avec un tel arrangement des injecteurs intégrés aux doseurs, c'est la dimension longitudinale de la trémie qui est importante.

Le but de l'invention est de proposer un semoir ayant une grande largeur de travail avec une distribution de produit précise pour chaque élément d'introduction de produit dans le sol.

A cet effet, une importante caractéristique de l'invention consiste en ce que lesdits doseurs sont regroupés en au moins deux rangées longitudinales et que les injecteurs sont regroupés en au moins une rangée transversale. Grâce à cette caractéristique, le produit contenu dans la trémie peut être distribué avec précision à un grand nombre d'éléments d'introduction de produit dans le sol. La mise en place et le branchement des conduites d'acheminement sur les injecteurs sont simples et accessibles. Par ailleurs, les conduites d'acheminement s'étendent dans la partie centrale du châssis de cette manière elles ne risquent pas d'être détériorées lors des manoeuvres de repliage et dépliage du semoir.

D'autres caractéristiques et avantages de l'invention se dégageront de la description qui va suivre en regard des dessins annexés qui ne sont donnés qu'à titre d'exemples non limitatifs de l'invention avec référence. Sur ces dessins :
- la **figure 1** représente, en vue de dessus, un semoir selon la présente invention dans une position de travail,
- la **figure 2** est une vue selon les flèches II de la figure 1,
- la **figure 3** représente une vue de face d'une partie du semoir de l'invention,
- la **figure 4** est une vue selon les flèches IV de la figure 3.

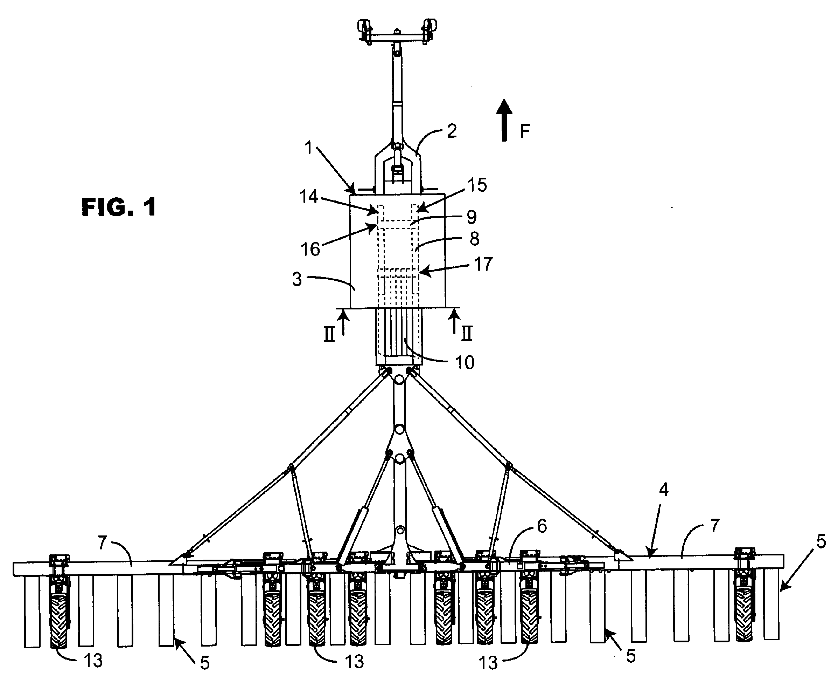

La machine agricole selon l'invention représentée à la figure 1 est un semoir (1) dans une position de travail. Le semoir (1) comporte un châssis (2) longitudinal. Le châssis (2) porte une trémie (3) et une poutre transversale (4) sur laquelle sont répartis des éléments d'introduction de produit dans le sol (5). La trémie (3) est destinée à contenir le produit à distribuer. Ce produit peut être de l'engrais ou des graines. La poutre transversale (4) est sensiblement horizontale et présente un tronçon central (6) et deux tronçons latéraux (7). Les tronçons latéraux (7) s'étendent de part et d'autre du tronçon central (6) au travail et s'étendent parallèlement au châssis (2) pour le transport. Ce semoir présente une largeur de travail supérieure à la largeur autorisée pour les déplacements sur les routes. Des vérins permettent de replier les tronçons latéraux vers l'avant en pivotant autour d'une articulation verticale respective pour réduire l'encombrement en largeur pour le transport sur les routes.

Les éléments d'introduction de produit dans le sol (5) sont répartis de manière régulière sur la poutre transversale (4). Les éléments d'introduction de produit dans le sol (5) sont représentés sous forme schématique sur la figure 1. L'écartement entre les éléments d'introduction de produit dans le sol (5) est réglable. Le semoir de l'invention est équipé d'une distribution individuelle c'est-à-dire rang par rang. Ainsi, chaque élément d'introduction de produit dans le sol (5) est alimenté de manière individuelle en produit par la trémie (3) au moyen d'un doseur (8), d'un injecteur (9) et d'une conduite d'acheminement (10) respectifs. La quantité de produit distribuée par une telle distribution individuelle est précise et régulière. Le transport du produit est réalisé de manière pneumatique vers les éléments d'introduction de produit dans le sol (5).

Selon une importante caractéristique de l'invention, les doseurs (8) sont regroupés en au moins une rangée longitudinale (14, 15) et les injecteurs (9) sont regroupés en au moins une rangée transversale (16, 17). Préférentiellement, les doseurs (8) sont regroupés en au moins deux rangées longitudinales (14, 15), lesdites rangées sont parallèles. Une telle disposition des doseurs (8) et des injecteurs (9) permet d'alimenter le nombre important d'éléments d'introduction de produit dans le sol (5) du semoir (1). Grâce aux injecteurs (9) disposés transversalement, la mise en place et le branchement des conduites d'acheminement (10) sont plus faciles. Par ailleurs, ces conduites d'acheminement (10) sont disposées les unes à côté des autres pour former un ensemble compact permettant une intégration dans le châssis (2). Les injecteurs (9) et les conduites d'acheminement (10), notamment au niveau de leur branchement, sont alors protégés par le châssis (2) et ne risquent pas d'être endommagés lors du repliage et dépliage du semoir (1). La trémie (3) s'étend longitudinalement sur le châssis (2), ce qui permet de respecter la largeur de transport lorsque les tronçons latéraux (7) sont repliés vers l'avant le long du châssis (2). Avec une intégration des injecteurs (9) dans le châssis (2), le centre de gravité de la trémie (3) est relativement bas, proche du sol. La stabilité du semoir est donc améliorée au travail comme au transport. Par ailleurs, la hauteur de chargement de la trémie est réduite.

D'une manière avantageuse, les doseurs (8) sont regroupés en deux rangées longitudinales (14, 15) et les injecteurs (9) sont regroupés en au moins une rangée transversale (16, 17). Dans l'exemple de réalisation représenté, les doseurs (8) sont regroupés en deux rangées longitudinales (14, 15) et les injecteurs (9) sont regroupés en deux rangées transversales (16, 17).

Selon une autre caractéristique de l'invention, un dispositif de déviation (11) est intégré entre chaque doseur (8) et l'injecteur (9) respectif. Ainsi, le produit distribué par les doseurs (8) orientés longitudinalement, en sortie de la trémie (3), est dirigé vers les injecteurs (9) respectifs orientés transversalement grâce aux dispositifs de déviation (11) correspondants.

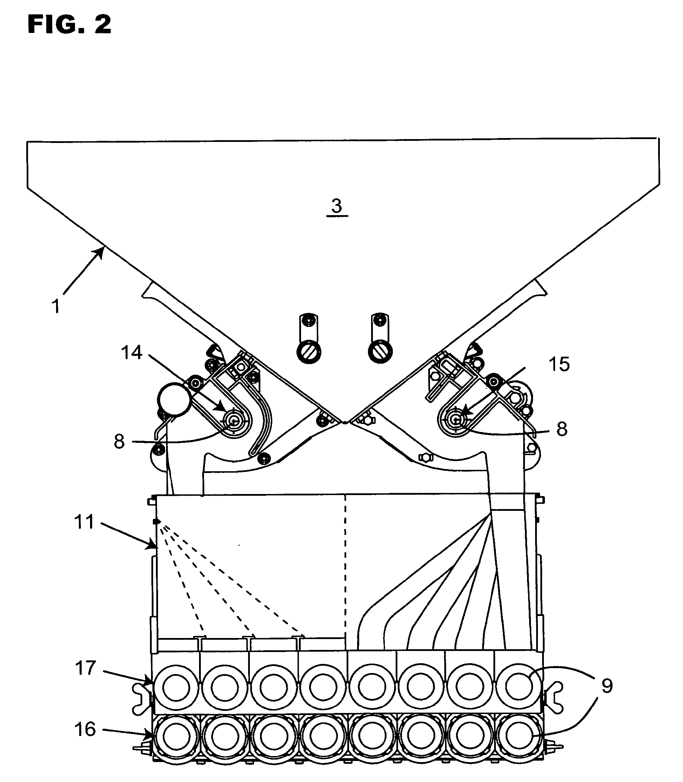

La figure 2 représente une vue arrière de la trémie selon les flèches II de la figure 1. La trémie (3) présente dans sa partie inférieure une forme d'entonnoir permettant au produit de s'écouler vers les doseurs (8) disposés de chaque côté de la trémie (3). Pour améliorer l'écoulement du produit vers les doseurs (8), des agitateurs sont prévus dans la trémie (3). Les agitateurs s'étendent parallèlement aux doseurs (8). A la lumière de la figure 2, on remarque que le produit distribué par les deux rangées longitudinales (14, 15) de doseurs (8) est réorienté vers les deux rangées transversales (16, 17) d'injecteurs (9). Les deux rangées longitudinales (14, 15) sont disposées symétriquement par rapport au plan médian de la trémie (3). Elles s'étendent au même niveau sous la trémie (3). Les rangées transversales (16, 17) sont disposées, quant à elles, l'une au-dessus de l'autre. Les dispositifs de déviation (11) s'étendent entre les doseurs (8) et les injecteurs (9). Un dispositif de déviation (11) convenant à effectuer le changement de direction du produit entre le doseur (8) et l'injecteur (9) correspondant peut être une rampe ou un tuyau. Ces deux exemples de réalisation ont été représentés sur la figure 2. Des rampes ont été représentées sur la partie gauche de la figure alors que des tuyaux ont été représentés sur la partie droite. Il est possible d'envisager d'autres éléments permettant le changement de direction du produit sans sortir du cadre de l'invention.

Selon la configuration du semoir, la trémie (3) est une réserve de produit telle que des graines ou telle que du produit fertilisant par exemple de l'engrais. Les éléments d'introduction de produit dans le sol (5) sont alors un élément semeur destiné à implanter les graines dans le sol respectivement un organe enfouisseur pour l'engrais.

La machine agricole représentée à la figure 1 dans une position de travail est un semoir (1) du type semoir monograine ou semoir à éléments. Le semoir (1), muni d'un attelage dans sa partie avant, est destiné à être attelé au système d'attelage d'un tracteur (non représenté). Le tracteur déplace et anime le semoir (1) suivant une direction d'avance indiquée par la flèche (F). Le semoir de l'invention comporte seize éléments d'introduction de produit dans le sol (5), représentés schématiquement, répartis à écartements constants et réglables sur la poutre transversale (4). La poutre transversale (4) s'appuie au sol au moyen de roues (13). Le semoir (1) présente donc une grande largeur de travail préférentiellement d'au moins 12 mètres. Une telle largeur de travail impose de replier les tronçons latéraux (7) pour les déplacements sur les routes et chemins afin de réduire la largeur du semoir (1).

Dans l'exemple de réalisation, le semoir (1) est équipé de manière à réaliser l'apport d'engrais et le semis des graines sur la ligne de semis en un seul passage. L'engrais à proximité de la graine permet de lui assurer un développement favorable. Ainsi l'élément d'introduction de produit dans le sol (5) est un organe enfouisseur et la trémie (3) est destinée à contenir de l'engrais ou produit fertilisant. Les graines sont déposées une à une sur la ligne de semis à des écartements constants les unes par rapport aux autres par un élément semeur. Chaque élément semeur possède une trémie, un dispositif de dosage et un dispositif d'implantation. L'élément semeur est monté sur la poutre transversale (4) au moyen d'un parallélogramme déformable lui permettant un déplacement parallèle au sol. Pour déposer l'engrais au voisinage de la graine, un organe enfouisseur est donc monté à l'avant de devant chaque élément semeur.

Avec une distribution rang par rang, le nombre de doseurs, le nombre d'injecteurs et le nombre d'éléments d'introduction de produit dans le sol (5) est équivalent, ici seize. La trémie (3) est disposée longitudinalement, parallèlement à la direction d'avance (F), elle s'étend sur la partie avant du châssis (2). Cette position permet un report de poids de la trémie (3) vers le tracteur. La trémie (3) présente dans sa partie inférieure deux rangées (14, 15) de huit doseurs (8) s'étendant longitudinalement de part et d'autre de la trémie (3). Pour être acheminé jusqu'à l'organe enfouisseur, l'engrais s'écoule donc au travers des dispositifs de déviation (11) par gravité pour arriver jusqu'aux injecteurs (9) permettant le transport de l'engrais jusque dans le sol par l'intermédiaire des conduites d'acheminement (10). L'engrais est transporté jusque dans le sol via un flux d'air. Le flux d'air est injecté en amont des injecteurs (9). Sur la figure 2, les seize injecteurs (9) sont regroupés en deux rangées (16, 17) superposées de huit injecteurs. Sur chaque rangée (16, 17), les injecteurs (9) peuvent être alignés ou sensiblement décalés entre eux, dans la direction d'avance (F), pour favoriser l'écoulement dans les dispositifs de déviation (11). Les injecteurs (9) s'étendent transversalement sur le châssis (2) du semoir (1). Les dispositifs de déviation (11) sont également au nombre de seize.

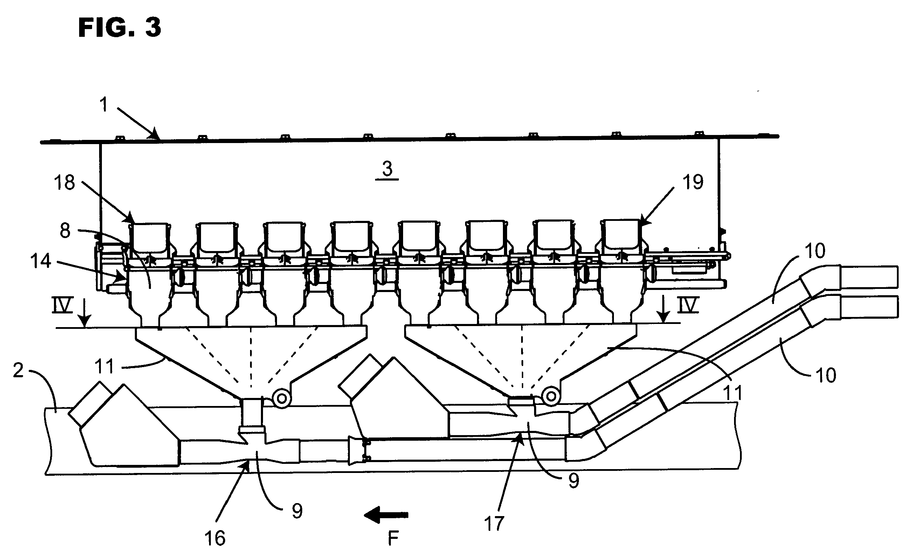

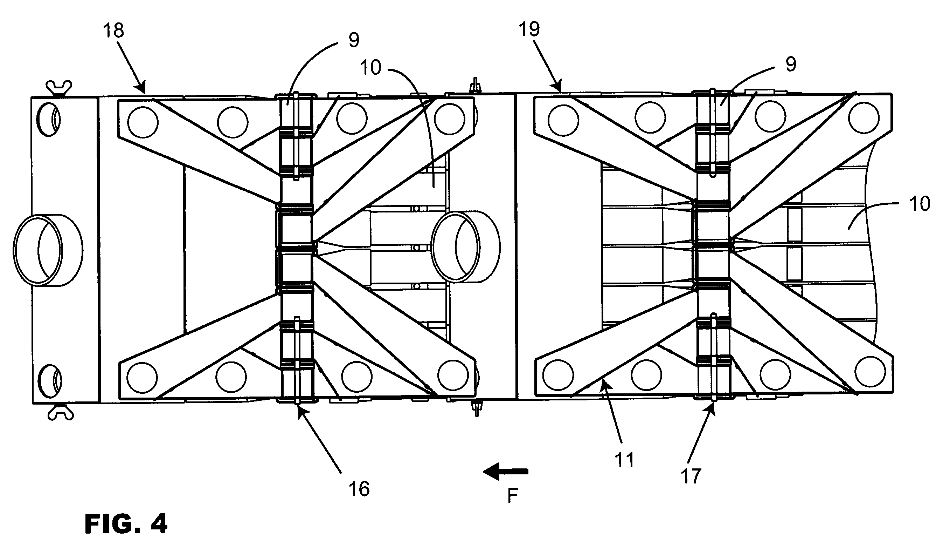

La figure 3 représente une vue de côté de la partie inférieure de la trémie (3). On remarque que la première rangée transversale (16) d'injecteurs (9), compte tenu de la direction d'avance (F), est destinée à recevoir l'engrais du groupe avant (18) composé de huit doseurs (8) et que la deuxième rangée transversale (17) est destinée à recevoir l'engrais du groupe arrière (19). Chaque groupe (18, 19) comporte huit doseurs (8). Ces deux groupes de doseurs (8) sont représentés à la figure 4 qui est une vue selon les flèches IV de la figure 3. Les sorties des doseurs (8) sont représentées sous forme de cercles. Les dispositifs de déviation (11) représentés sont des rampes permettant de diriger l'engrais depuis les doseurs (8) vers les injecteurs (9) respectifs. On remarque que les dispositifs de déviation (11) sont assemblés de manière à former un module. Un premier module pour le groupe avant (18) de doseurs (8) et un deuxième module pour le groupe arrière (19). Un tel concept permet ainsi de distribuer du produit à un semoir (1) comportant un multiple de quatre, six, huit éléments d'introduction de produit dans le sol (5), donc un multiple de quatre, six, huit doseurs. Ces modules présentent sensiblement une forme de quadrilatère proche d'un carré. Chaque doseur (8) dispose d'une vanne de fermeture individuelle pour s'adapter à d'autres multiples et notamment au nombre de rangs impairs.

Les conduites d'acheminement (10) s'étendent vers l'arrière jusqu'aux éléments d'introduction de produit dans le sol (5). Ces conduites d'acheminement (10) sont branchées sur les injecteurs (9). Comme les injecteurs (9) s'étendent sur deux rangées (16, 17), les conduites d'acheminement (10) s'étendent également sur deux rangées. On remarque que la deuxième rangée transversale (17) s'étend au-dessus de la première rangée transversale (16) de manière à ce que les conduites d'acheminement (10) respectifs ne se croisent pas et que les branchements soient aisés. Un tel semoir est donc compact en hauteur et la hauteur de chargement pour la trémie (3) peut être réduite.

Selon un exemple de réalisation non représenté, le semoir est configuré uniquement pour le semis de graines. Les éléments d'introduction de produit dans le sol (5) sont alors les éléments semeurs de graines et la trémie (3) est un réservoir centralisé de graines.

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Semoir (1) avec un châssis (2) longitudinal portant une trémie (3) contenant du produit et une poutre transversale (4) sur laquelle sont répartis des éléments d'introduction de produit dans le sol (5), ladite poutre transversale (5) présentant un tronçon central (6) et deux tronçons latéraux (7), les tronçons latéraux (7) s'étendant de part et d'autre du tronçon central (6) au travail et s'étendant parallèlement audit châssis (2) pour le transport, chaque élément d'introduction de produit dans le sol (5) étant alimenté en produit par la trémie (3) au moyen d'un doseur (8), d'un injecteur (9) et d'une conduite d'acheminement (10) respectifs, ***caractérisé en ce que*** lesdits doseurs (8) sont regroupés en au moins deux rangées longitudinales (14, 15) et que lesdits injecteurs (9) sont regroupés en au moins une rangée transversale (16, 17).

2. Semoir selon la revendication 1, ***caractérisé en ce que*** lesdits doseurs (8) sont regroupés en deux rangées longitudinales (14, 15) et que lesdits injecteurs (9) sont regroupés en au moins une rangée transversale (16, 17).

3. Semoir selon la revendication 1 ou 2, ***caractérisé en ce* qu'**un dispositif de déviation (11) est intégré entre ledit doseur (8) et ledit injecteur (9) respectif.

4. Semoir selon la revendication 3, ***caractérisé en ce* que** les dispositifs de déviation (11) sont assemblés de manière à former un module.

5. Semoir selon la revendication 3 ou 4, ***caractérisé en ce* qu'**au moins un dispositif de déviation (11) est une rampe.

6. Semoir selon la revendication 3 ou 4, ***caractérisé en ce* qu'**au moins un dispositif de déviation (11) est un tuyau.

7. Semoir selon l'une quelconque des revendications 1 à 6, ***caractérisé en ce que*** ladite trémie (3) s'étend longitudinalement sur ledit châssis (2).

8. Semoir selon l'une quelconque des revendications 1 à 7, ***caractérisé en ce que*** lesdits injecteurs (9) et lesdits tuyaux d'acheminement (10) sont protégés par ledit châssis (2).

9. Semoir selon l'une quelconque des revendications 1 à 8, ***caractérisé en ce que*** ladite deuxième rangée transversale (17) d'injecteurs (9) disposée derrière s'étend au-dessus de ladite première rangée transversale (16).

10. Semoir selon l'une quelconque des revendications 1 à 9, ***caractérisé en ce que*** lesdits injecteurs (9) formant une rangée transversale (16, 17) peuvent être alignés ou sensiblement décalés par rapport à la direction d'avance (F).

## Patentansprüche

1. Sämaschine (1) mit einem Längsrahmen (2), der einen Behälter (3) trägt, der Produkte enthält, und einem Querbalken (4), auf dem Elemente (5) zum Einbringen von Produkten in den Boden verteilt sind, wobei der Querbalken (5) einen zentralen Abschnitt (6) und zwei seitliche Abschnitte (7) aufweist, wobei sich die seitlichen Abschnitte (7) bei der Arbeit auf beiden Seiten des zentralen Abschnitts (6) und für den Transport parallel zum Rahmen (2) erstrecken, wobei jedes Element (5) zum Einbringen von Produkten in den Boden vom Behälter (3) mittels einer jeweiligen Dosiereinheit (8), einer jeweiligen Einspritzdüse (9) und einer jeweiligen Zuführleitung (10) mit Produkten gespeist wird, ***dadurch gekennzeichnet,* dass** die Dosiereinheiten (8) in mindestens zwei Längsreihen (14, 15) gruppiert sind, und dass die Einspritzdüsen (9) in mindestens einer Querreihe (16, 17) gruppiert sind.

2. Sämaschine nach Anspruch 1, ***dadurch gekennzeichnet,* dass** die Dosiereinheiten (8) in zwei Längsreihen (14, 15) gruppiert sind, und dass die Einspritzdüsen (9) in mindestens einer Querreihe (16, 17) gruppiert sind.

3. Sämaschine nach Anspruch 1 oder 2, ***dadurch gekennzeichnet,* dass** eine Ablenkungsvorrichtung (11) zwischen der Dosiereinheit (8) und der jeweiligen Einspritzdüse (9) integriert ist.

4. Sämaschine nach Anspruch 3, ***dadurch gekennzeichnet,* dass** die Ablenkungsvorrichtungen (11) so zusammengebaut sind, dass sie ein Modul bilden.

5. Sämaschine nach Anspruch 3 oder 4, ***dadurch gekennzeichnet,* dass** mindestens eine Ablenkungsvorrichtung (11) eine Rampe ist.

6. Sämaschine nach Anspruch 3 oder 4, ***dadurch gekennzeichnet,* dass** mindestens eine Ablenkungsvorrichtung (11) ein Schlauch ist.

7. Sämaschine nach irgend einem der Ansprüche 1 bis 6, ***dadurch gekennzeichnet,* dass** sich der Behälter (3) längs auf dem Rahmen (2) erstreckt.

8. Sämaschine nach irgend einem der Ansprüche 1 bis 7, ***dadurch gekennzeichnet,* dass** die Einspritzdüsen (9) und die Zuführleitungen (10) durch den Rahmen (2) geschützt sind.

9. Sämaschine nach irgend einem der Ansprüche 1 bis 8, ***dadurch gekennzeichnet,* dass** sich die zweite hinten angeordnete Querreihe (17) von Einspritzdüsen (9) über der ersten Querreihe (16) erstreckt.

10. Sämaschine nach irgend einem der Ansprüche 1 bis 9, ***dadurch gekennzeichnet,* dass** die Einspritzdüsen (9), die eine Querreihe (16, 17) bilden, in Bezug auf die Vorschubrichtung (F) gefluchtet oder im Wesentlichen versetzt sein können.

## Claims

1. Seeder (1) with a longitudinal chassis (2) carrying a hopper (3) containing the product and a transverse beam (4) on which elements (5) for depositing product in the soil are distributed, the said transverse beam (5) having a central section (6) and two lateral sections (7), the lateral sections (7) extending on either side of the central section (6) during work and extending parallel to the said chassis (2) during transportation, each element (5) for depositing product in the soil being supplied with product by the hopper (3) by means of a respective dispenser (8), injection nozzle (9) and routing pipe (10), ***characterised in* that** the said dispensers (8) are grouped together in at least two longitudinal rows (14, 15) and that the said injection nozzles (9) are grouped together in at least one transverse row (16, 17).

2. Seeder according to claim 1, ***characterised in* that** the said dispensers (8) are grouped together in two longitudinal rows (14, 15) and that the said injection nozzles (9) are grouped together in at least one transverse row (16, 17).

3. Seeder according to claim 1 or 2, ***characterised in* that** a deflection device (11) is integrated between the said dispenser (8) and the said respective injection nozzle (9).

4. Seeder according to claim 3, ***characterised in* that** the deflection devices (11) are assembled so as to form a module.

5. Seeder according to claim 3 or 4, ***characterised in* that** at least one deflection device (11) is a slope.

6. Seeder according to claim 3 or 4, ***characterised in* that** at least one deflection device (11) is a pipe.

7. Seeder according to any one of the claims 1 to 6, ***characterised in* that** the said hopper (3) extends longitudinally on the said chassis (2).

8. Seeder according to any one of the claims 1 to 7, ***characterised in* that** the said injection nozzles (9) and the said routing pipes (10) are protected by the said chassis (2).

9. Seeder according to any one of the claims 1 to 8, ***characterised in* that** the said second transverse row (17) of injection nozzles (9) positioned behind extends above the said first transverse row (16).

10. Seeder according to any one of the claims 1 to 9, ***characterised in* that** the said injection nozzles (9) forming a transverse row (16, 17) can be aligned or substantially offset relative to the direction of advance (F).
